# EUROPÄISCHE PATENTSCHRIFT

(11) **EP 0 495 767 B1**
(45) Veröffentlichungstag und Bekanntmachung des Hinweises auf die Patenterteilung: **10.08.1994**
(21) Anmeldenummer: 92890007.5
(22) Anmeldetag: 15.01.1992
(51) Int. Cl.: G02C 5/22

(54) **Scharniergelenk zwischen Bügel und Bügelbacken eines Brillengestells**
Hinge between temple and frame of spectacles
Charnière entre branche et monture d'une paire de lunettes

(30) Priorität: 17.01.1991 AT 97/91
(43) Veröffentlichungstag der Anmeldung: 22.07.1992
(73) Patentinhaber: SILHOUETTE INTERNATIONAL GESELLSCHAFT m.b.H., A-4021 Linz (AT)
(72) Erfinder: Hofmair, Herbert, A-4030 Linz (AT); Fuchs, Gerhard, A-4061 Pasching (AT)
(74) Vertreter: Hübscher, Gerhard, Dipl.-Ing.

(56) Entgegenhaltungen:
- WO-A-90/01718
- US-A- 2 210 507
- US-A- 3 156 756
- US-A- 4 153 347
- US-A- 4 832 478

## Beschreibung

Die Erfindung bezieht sich auf ein Scharniergelenk zwischen Bügel und Bügelbacken eines Brillengestells mit einem an der dem Bügel zugekehrten Stoßfläche des Bügelbackens angesetzten, in eine gegen die Bügelinnenseite offene Aufnahmetasche des Bügels eingreifenden Scharnierlappen, der die Scharnierachse bildende Achsstummel trägt, die innerhalb der Aufnahmetasche in Lagerausnehmungen schnappverschlußartig einrastbar sind, von denen sich Einführnuten für die Achsstummel zur Bügelinnenseite erstrecken (siehe US-A- 4 832478 z.B.).

Um bei Brillengestellen aus Kunststoff die Scharnierteile an den Bügelbacken und an den Bügeln bei der Herstellung dieser Teile aus Kunststoff mitformen zu können, ist es bekannt, an den Bügelbacken einen Scharnierlappen vorzusehen, der nach oben und unten vorragende, die Scharnierachse bildende Achsstummel trägt, während in den Bügeln eine Aufnahmetasche für die backenseitigen Scharnierlappen ausgespart wird. Die Achsstummel der Scharnierlappen greifen dabei in entsprechende Lagerausnehmungen innerhalb der Aufnahmetaschen des zugehörigen Bügels ein. Zum Einführen der Achsstummel in die Lagerausnehmungen ist die Aufnahmetasche mit Einführnuten versehen, die von der dem Bügelbacken zugekehrten Stoßfläche des Bügels ausgehen und sich bis zu den Lagerausnehmungen erstrecken, so daß die Achsstummel aufgrund einer entsprechenden Einlaufsteigung der Einführnuten beim Erreichen der Lagerausnehmungen schnappverschlußartig in diese einrasten. Nachteilig bei dieser bekannten Konstruktion ist allerdings, daß die Achsstummel des backenseitigen Scharnierlappens bei einem Verschwenken des Bügels über die anschlagbegrenzte Strecklage des Scharniergelenkes hinaus aus den Lagerausnehmungen herausgedrückt werden, so daß sich der Bügel von der Fassung löst. Der Bügel kann zwar wieder auf den backenseitigen Scharnierlappen bis zum Einrasten der Achsstummel in die Lagerausnehmungen aufgesteckt werden, doch läßt sich bei einem wiederholten Ausrasten der Scharnierteile ein Ausleiern der Gelenkverbindung nicht vermeiden, was unter Umständen die ordnungsgemäße Brillenbenützung gefährdet.

Der Erfindung liegt somit die Aufgabe zugrunde, ein Scharniergelenk der eingangs geschilderten Art mit einfachen konstruktiven Mitteln so auszugestalten, daß ein ungewolltes Ausrasten der Scharnierteile des Scharniergelenkes ausgeschlossen werden kann.

Die Erfindung löst die gestellte Aufgabe dadurch, daß die Einführnuten von der an der Stoßfläche des Bügelbackens anliegenden Außenkante des Bügels weggerichtet verlaufen.

Da bei einem Verschwenken des Bügels über die anschlagbegrenzte Strecklage des Scharniergelenkes hinaus die an der Stoßfläche des Bügelbackens anliegende Außenkante des Bügels die für das Weiterschwenken maßgebende Schwenkabstützung bildet und die Einführnuten von dieser Bügelaußenkante weggerichtet verlaufen, greifen die zwischen den Achsstummeln des backenseitigen Scharnierlappens und den Lagerausnehmungen innerhalb der bügelseitigen Aufnahmetasche auftretenden Kräfte quer zu den Einführnuten an den Scharnierteilen an, so daß wegen des Fehlens einer ausreichenden Kraftkomponente in Richtung der Einführnuten das Ausrasten der Achsstummel aus den Lagerausnehmungen wirksam unterbunden wird. Diese Ausrichtung der Einführnuten bedingt eine Schwenkstellung des Bügels für das Ein- bzw. Ausrasten der Achsstummel, was beim bewußten Ansetzen bzw. Abnehmen der Bügel berücksichtigt werden muß und eine zusätzliche Sicherung gegen ein ungewolltes Ausrasten der Scharnierteile mit sich bringt.

In der Zeichnung ist der Erfindungsgegenstand beispielsweise dargestellt. Es zeigen
- Fig. 1: ein erfindungsgemäßes Scharniergelenk zwischen Bügel und Bügelbacken in einem vereinfachten Schaubild vor dem Zusammenfügen der Scharnierteile,
- Fig. 2: ein solches Scharniergelenk in einer Seitenansicht von der Bügelinnenseite,
- Fig. 3: eine zum Teil aufgerissene Draufsicht auf das Schar niergelenk und
- Fig. 4: das Scharniergelenk in einem Schnitt nach der Linie IV-IV der Fig. 3.

Um einen Bügel 1 an der Brillenfassung 2 anlenken zu können, weisen die an der Brillenfassung 2 vorgesehenen Bügelbacken 3 einen über die dem Bügel 1 zugekehrte Stoßfläche 4 vorragenden Scharnierlappen 5 mit zwei die Scharnierachse bildenden Achsstummeln 6 auf, während der Bügel 1 mit einer Aufnahmetasche 7 für den Scharnierlappen 5 versehen ist. Innerhalb dieser Aufnahmetasche 7, die gegen die Innenseite des Bügels 1 offen ist, sind zwei Lagerausnehmungen 8 vorgesehen, in die die Achsstummel 6 schnappverschlußartig einrasten. Zum Einführen der Achsstummel 6 in die Lagerausnehmungen 8 sind im Bereich der Aufnahmetasche 7 Einführnuten 9 vorgesehen, deren Höhe im Sinne einer Einlaufsteigung gegen die Lagerausnehmungen 8 hin abnimmt, um das schnappverschlußartige Einrasten der Achsstummel in die Lagerausnehmungen 8 sicherzustellen.

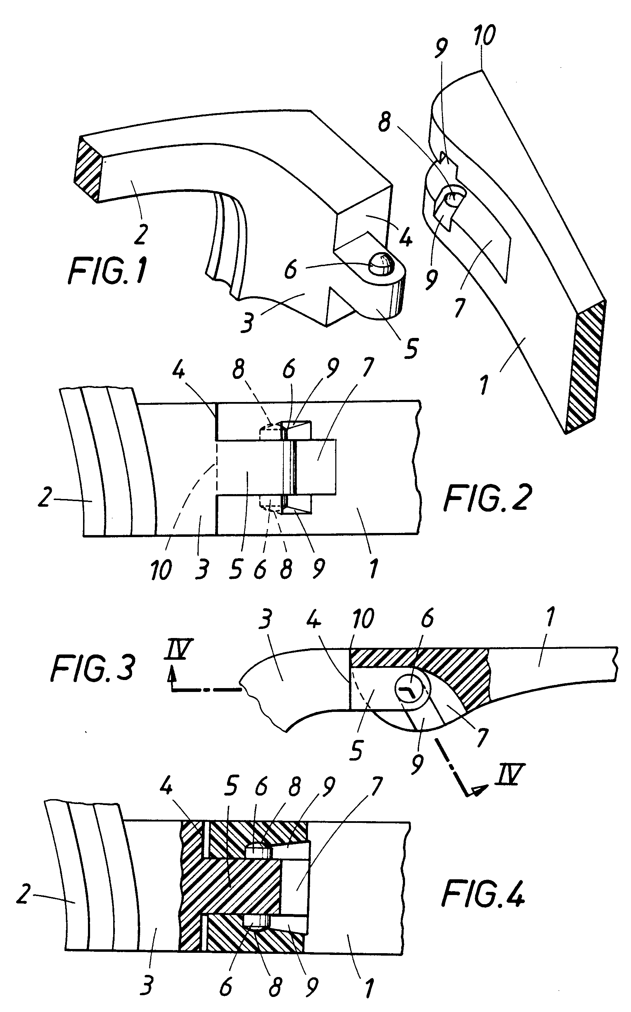

Im Gegensatz zu herkömmlichen Scharniergelenken dieser Art münden die Einführnuten 9 nicht gegen die Stoßfläche 4 des Bügelbackens 3 hin, sondern verlaufen von der an der Stoßfläche 4 des Bügelbackens 3 anliegenden Außenkante 10 des Bügels 1 weggerichtet, wie dies insbesondere den Fig. 1 und 3 entnommen werden kann. Da bei einem Verschwenken des Bügels 1 über die in der Fig. 3 dargestellte Strecklage des Scharniergelenkes hinaus nicht die Achsstummel 6 die Scharnierachse bilden, sondern die Außenkante 10 des Bügels 1 die Schwenkabstützung ergibt, verlaufen die Einführnuten 9 im wesentlichen radial zu der neuen Schwenkachse, so daß ein Austritt der Achsstummel 6 aus den Lagerausnehmungen 8 in Richtung der Einführnuten 9 ausgeschlossen wird. Der Bügel 1 kann daher auch durch keine Schwenkbelastung über die Strecklage hinaus vom Bügelbacken 3 gelöst werden. Zum Lösen des Bügels 1 ist es vielmehr erforderlich, den Bügel 1 in einer eingeschwenkten Zwischenstellung, in der die Einführungsnuten 9 etwa parallel zur Stoßfläche 4 des Bügelbackens 3 verlaufen, in Richtung der Einführnuten 9 aus dem Scharniergelenk herauszudrücken.

Obwohl sich das dargestellte Scharniergelenk insbesondere zur Fertigung aus Kunststoff eignet, ist es selbstverständlich nicht auf diesen Werkstoffeinsatz beschränkt. Es braucht ja lediglich sichergestellt zu werden, daß die Achsstummel 6 schnappverschlußartig in die Lagerausnehmungen 8 einrasten können. Der Schnappverschluß muß keineswegs durch die Einlaufsteigungen der Einführnuten 9 in Richtung der Achse der Achsstummel 6 wirksam werden. Hinsichtlich der Einhaltung fertigungsbedingter Toleranzen ergeben sich sogar günstigere Konstruktionsverhältnisse, wenn die Einführnuten im Bereich ihrer Seitenwände vorragende Rastansätze aufweisen, die die Breite der Einführnuten auf ein Maß kleiner als der Achsstummeldurchmesser einengen, die Achsstummel 6 in den Lagerausnehmungen festhalten und zum Ein- und Ausrasten des Scharnieres überwunden werden müssen.

## Patentansprüche

1. Scharniergelenk zwischen Bügel (1) und Bügelbacken (3) eines Brillengestells mit einem an der dem Bügel (1) zugekehrten Stoßfläche (4) des Bügelbackens (3) angesetzten, in eine gegen die Bügelinnenseite offene Aufnahmetasche des Bügels (1) eingreifenden Scharnierlappen (5), der die Scharnierachse bildende Achsstummel (6) trägt, die innerhalb der Aufnahmetasche in Lagerausnehmungen schnappverschlußartig einrastbar sind, von denen sich Einführnuten (9) für die Achsstummel (6) zur Bügelinnenseite erstrecken, dadurch gekennzeichnet, daß die Einführnuten (9) von der an der Stoßfläche (4) des Bügelbackens (3) anliegenden Außenkante (10) des Bügels (1) weggerichtet verlaufen.

## Claims

1. A hinge joint between the side piece (1) and the flange (3) of a spectacles frame, having a hinge lug (5) which is attached to the abutment surface (4) of the flange (3) facing the side piece (1) and which engages in a receiving pocket of the side piece (1) open towards the inside of the side piece, said hinge lug carrying the pivot stub (6) which forms the hinge pivot and which is adapted to engage inside the receiving pocket in bearing recesses after the style of a snap fastener, entry grooves (9) for the pivot stubs (6) extending from said bearing recesses towards the inside of the side piece, characterised in that the entry grooves (9) extend away from the outer edge (10) of the side piece (1) adjacent the abutment surface (4) of the flange (3).

## Revendications

1. Articulation à charnière, entre branche (1) et support de branche (3) d'une monture de lunettes, avec une languette de charnière (5), placée sur la face de butée (4), tournée vers la branche (1), du support de branche (3) et s'engageant dans une poche de réception de la branche (1), ouverte en direction de l'intérieur de la branche, languette portant les bouts d'axe (6), constituant l'axe de charnière et susceptibles de s'encliqueter, à la façon de fermetures à déclic, à l'intérieur de la poche de réception, dans des évidements de tourillonnement, dont des rainures d'insertion (9), destinées aux bouts d'axe (6), s'étendent en direction de la face intérieure de branche,
caractérisée en ce que les rainures à'insertion (9) s'étendant en s'éloignant de l'arête extérieure (10), appuient sur la face de butée (4) du support (3) de la branche (1).
